# EUROPEAN PATENT APPLICATION

(11) **EP 2 821 199 A1**
(43) Date of publication of application: **07.01.2015**
(21) Application number: 14164998.8
(22) Date of filing: 16.04.2014
(51) Int. Cl.: B29C 33/30, B29C 45/26, B29C 45/17

(54) **Mould in particular for plastic materials**

(30) Priority: 24.04.2013 IT MI20130681
(71) Applicant: Onni-Stamp S.R.L., 14018 Villafranca d'Asti (ASTI) (IT)
(72) Inventor: Goria, Alessio, 14018 Villafranca d'Asti (Asti) (IT)
(74) Representative: Vittorangeli, Lucia

(57) **Abstract**

A mould (1) comprises a first body (2) and a second body (3) couplable together to form a moulding cavity (4) in which is arranged an insert (5a, 5b) for modifying the volume and/or shape of the moulding cavity (4). The insert (5a, 5b) comprises a stem (6) inserted along the longitudinal direction (7) in a cavity (8) associated with the first or second body (2, 3). A piston (11) is movable along the longitudinal direction (7) between a locking position of the insert (5a, 5b) and an unlocking position of the insert (5a, 5b). A plurality of balls is movable, due to the action of the piston (11), according to a trajectory incident to the longitudinal direction (7), between an interference position, corresponding to the locking position of the piston (11), and a release position, corresponding to the unlocking position of the piston (11). Helical springs (18) keep the piston (11) in the locking position. A hydraulic or pneumatic unit is capable of moving the piston (11) from the locking position to the unlocking position in opposition to the helical springs (18).

## Description

The present invention has as its subject a mould in particular for plastic materials.

In the field of moulds the practice is known of creating a moulding cavity by bringing together side by side and fixing two half-moulds having a suitable internal shape. To modify the shape and/or volume of the moulding cavity formed by the two half-moulds, the practice is known of locking at least one insert with respect to one of the two half-moulds so as to occupy a part of the moulding cavity. Generally the locking is performed by means of a bolt, with the result that for each replacement of the insert it is necessary to unscrew and screw up the bolt which is generally located in positions in the mould which are not easily reached.

Document US6887063 shows a method of locking an insert in the case of a mould for tyres. This document shows a key which is movable transversely with respect to a coupling portion of the insert and is suitable for being inserted in a groove in this coupling portion to prevent it from sliding out.

The movement of the key is fairly complex and requires the mould to have an asymmetrical structure. Furthermore, the locking forces involved are fairly limited and non-uniform over the entire surface of the coupling portion of the insert.

Document US7014446 shows an insert in a mould which is lockable by means of a pin located transversely on one side of a stem of the insert. In this case, too, the movement of the pin is rather complex and requires the mould to have an asymmetrical structure. The locking forces involved are rather limited and non-uniform over the entire surface of the stem. Finally, the structure is complex, necessitating further elements for unlocking the insert, located inter alia in positions on the mould which are not easily accessible.

In this context, the technical task underlying the present invention is to propose a mould which obviates the drawbacks in the known art as described above.

In particular, it is an object of the present invention to make available a mould wherein it is possible to perform rapid, reliable and precise replacement of the inserts.

A further object of the present invention is to propose a mould having a simple structure and secure and reliable operation, for example capable of generating high locking forces, which are preferably uniformly distributed over the stem of the insert and suitable for centralising it easily.

The technical task set and the objects specified are substantially attained by a mould, comprising the technical characteristics as set out in one or more of the accompanying claims. The dependent claims correspond to different embodiments of the invention.

Further characteristics and advantages of the present invention will become more apparent from the following indicative, and hence nonlimiting, description of a preferred, but not exclusive, embodiment of a mould as illustrated in the accompanying drawings, in which:
- figure 1 is a schematic view in section of a first embodiment of a mould according to the present invention;
- figure 2 is a schematic view in section of a second embodiment of a mould according to the present invention;
- figures 3a-3c are schematic views in section of an enlarged portion of the mould of figure 1 or 2 respectively in three different configurations and according to a first embodiment;
- figures 4a-4c are schematic views in section of an enlarged portion of the mould of figure 1 or 2 respectively in three different configurations and according to a second embodiment;

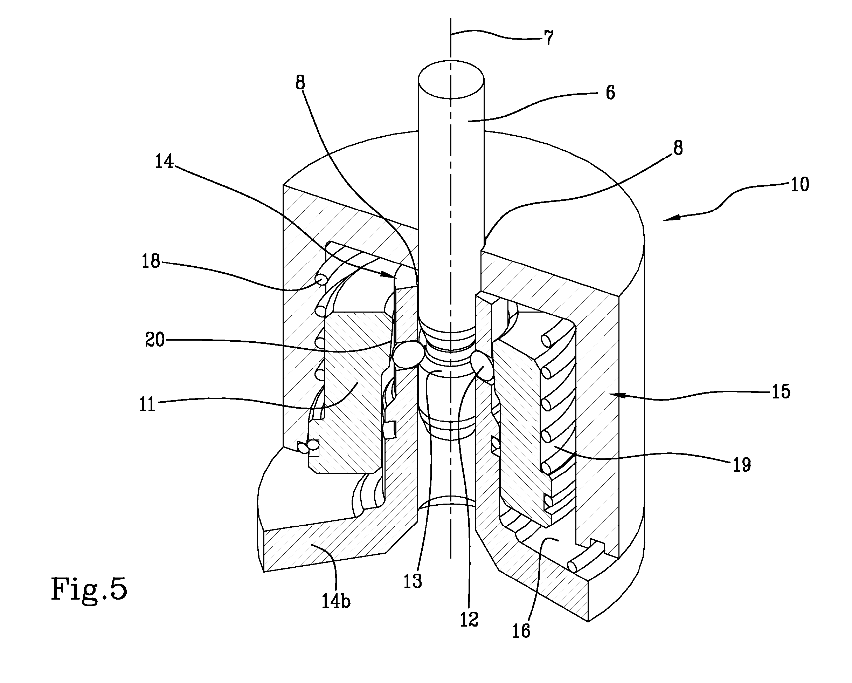

- figure 5 is a schematic perspective view, partially sectioned, of the enlarged portion of figure 4a.

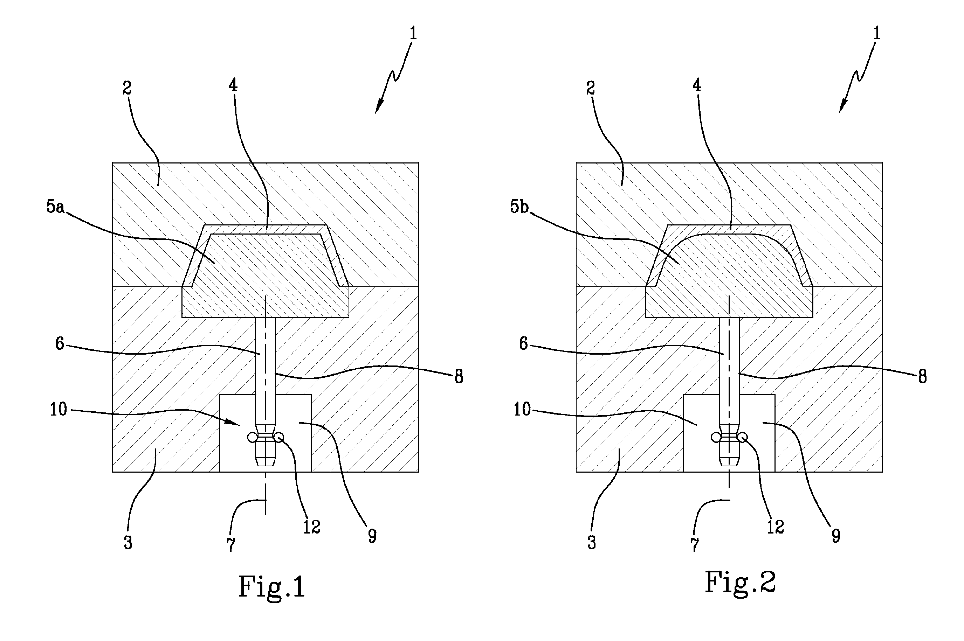

With reference to figures 1 and 2, number 1 indicates a mould in particular for plastic materials.

According to the example illustrated, the mould 1 comprises a first body 2 and a second body 3 which can be coupled to each other to form a moulding cavity 4 inside the mould itself. With particular reference to the example illustrated, the first body 2 is located above the second body 3. Furthermore, the first and second body form, according to the example illustrated, respectively a first and a second half-mould.

With reference to figure 1, number 5a indicates an insert located inside the moulding cavity 4. The conformation of the insert is such as to modify the volume and/or the shape of the moulding cavity. In particular, for each mould 1, two or more inserts 5a, 5b can be provided, having different shapes and/or dimensions. For example, figure 1 illustrates a first insert 5a and figure 2 illustrates a second insert 5b.

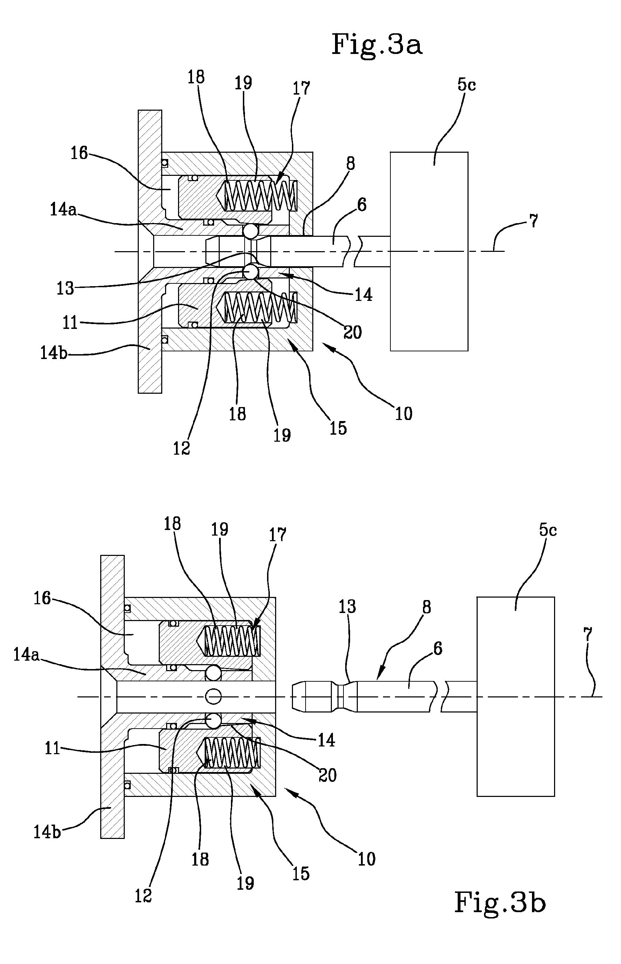

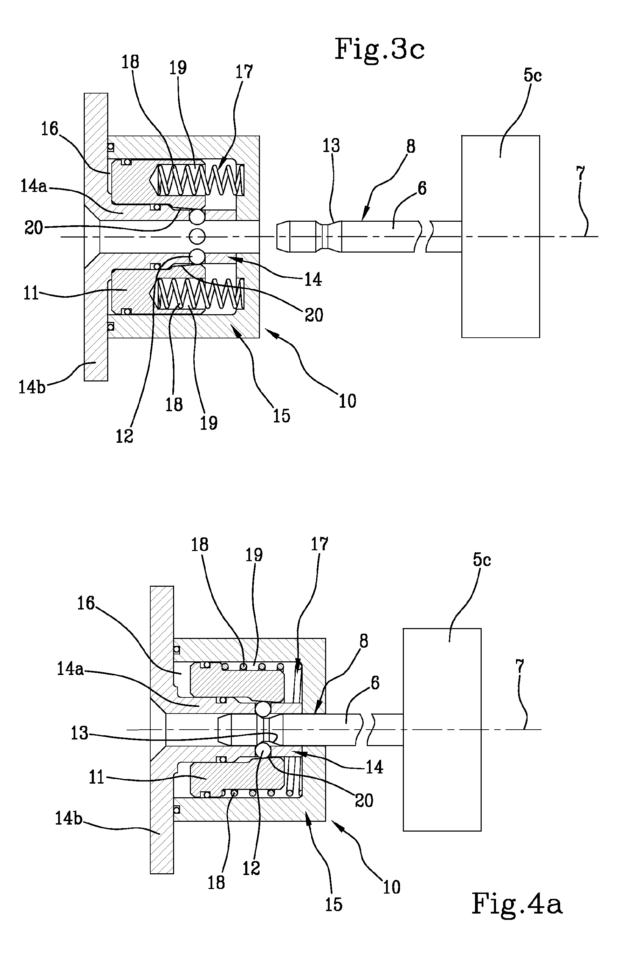

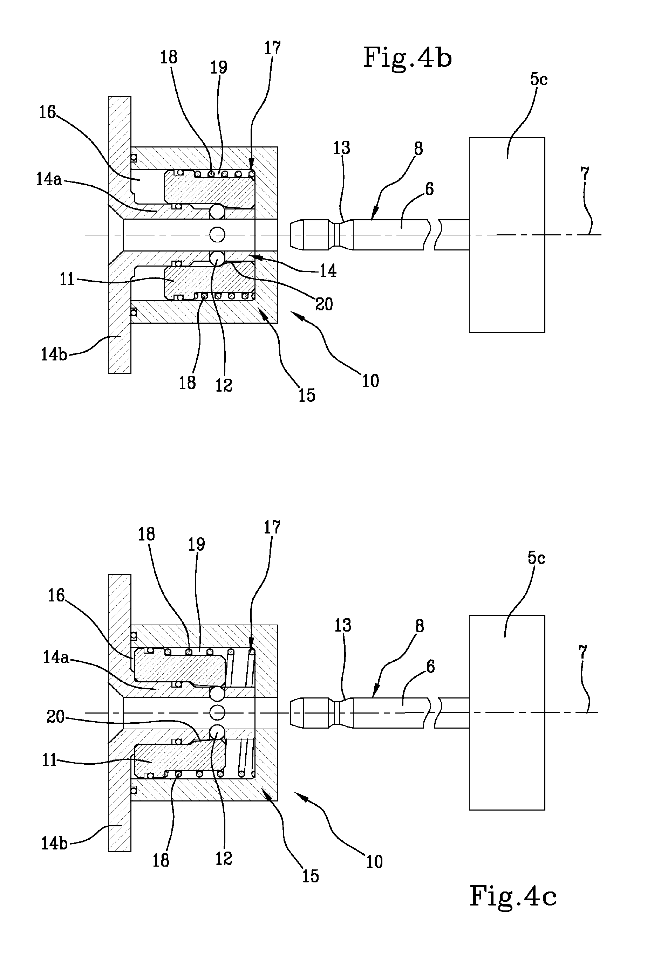

Further on in the description, reference will be made to any type of insert which can be made, either as indicated with the reference number 5a, or as indicated with the reference number 5b, or with other conformations, for example indicated with the reference number 5c in figures 3a-3c or 4a-4c. In fact, irrespective of the type, each insert comprises a stem 6 which extends along a longitudinal direction 7.

In accordance with an assembled configuration, for example illustrated in the drawings, the stem 6 is inserted along the longitudinal direction 7 in a cavity 8 associated with one of the two bodies of the mould. With reference to the example illustrated in the drawings, the cavity 8 is associated with the second body 3 and the following description will make reference to this arrangement, for simplicity of exposition, even though the cavity 8 (or several cavities 8) can equally well be provided in any of the bodies which form the mould. Preferably cavity 8 extends inside the second body 3 and terminates on the opposite side from the moulding cavity 4. Preferably cavity 8 terminates adjacent to an indentation 9 formed in the second body 3.

Number 10 indicates locking means operating in reversible manner on the stem 6 to reversibly lock it in the cavity 8 into which it is fitted. Preferably locking means 10 are arranged inside indentation 9, if present. Figures 1 and 2 illustrate only a portion of these locking means, illustrated enlarged and in detail in the subsequent drawings. In particular figures 3a-3c illustrate a first embodiment in three different configurations, while figures 4a-4c illustrate a second embodiment in three different configurations. With reference to figures 3a-3c, the locking means advantageously comprise a piston 11 movable along the longitudinal direction 7 between a locking position of the insert (figure 3a) and an unlocking position of the insert (figure 3b) and vice versa. In accordance with a possible embodiment, piston 11 is hollow and located concentrically and externally to stem 6.

Number 12 indicates at least one locking element movable through the action of piston 11 according to a trajectory incident to the longitudinal direction 7 between an interference position, corresponding to the locking position of piston 11 (figure 3a) and a release position, corresponding to the unlocking position of piston 11 (figure 3b) and vice versa. Preferably the locking element is movable according to a trajectory perpendicular to the longitudinal direction 7.

In the interference position, the locking element 12 prevents the stem 6 from sliding out from the respective cavity 8, while in the release position the stem 6 can be slid out from the relative cavity 8.

Preferably the stem 6 is provided with at least one undercut 13. In this case it is preferable that the locking element 12 located in the interference position should interfere with this undercut 13.

Preferably the locking element 12 is realised by means of a ball. In particular a plurality of balls is provided, distributed circumferentially with respect to the stem 6.

Number 14 indicates a guide structure suitable for receiving the locking element, in particular the plurality of balls movable due to the action of the piston 11 inside the guide structure itself. Preferably the guide structure 14 is located between the stem 6 and the piston 11. Preferably the guide structure 14 forms at least a portion of the cavity 8 into which the stem 6 is fitted.

In accordance with a possible embodiment, piston 11 is hollow and located concentrically with respect to the guide structure 14, which itself is hollow and respectively arranged concentrically and externally with respect to stem 6.

In accordance with a possible embodiment, number 15 indicates a cylinder of said locking means 10.

The cylinder 15 can be formed in one piece with the body which houses the insert (the second body 3 in the case illustrated in the drawings). Alternatively the cylinder 15 is mounted on the mould body which houses the stem, preferably inside indentation 9, if present.

The cylinder 15 is passed through by the stem 6, forming at least one portion of the cavity 8 into which the stem itself is fitted.

The piston 11 is housed inside the cylinder 15 which is slidable along the guide structure 14.

Preferably the guide structure 14 is conformed and arranged so as to create a closure to the cylinder 15. For example the guide structure 14 comprises a tubular portion 14a suitable for receiving the locking elements 12 (balls) and for receiving the stem 6 and a disc-like portion 14b capable of being positioned for closing the cylinder 15 and for forming a chamber 16, for example annular, inside the cylinder 15.

Preferably the movement of the piston from the unlocking position to the locking position is effected using actuator means different from those which effect the movement of the piston from the locking position to the unlocking position.

In accordance with one possible embodiment, positive actuator means 17 are provided operating on the piston 11 to position it and keep it in the locking position. The term "positive" refers to the fact of ensuring that the piston reaches and securely maintains the locking position even in the event of malfunction of the system.

For example it can be provided that the positive actuator means 17 comprise at least one elastic element, for example at least one helical spring 18, suitable for positively keeping the piston in the locking position. In the example illustrated in the drawings, the elastic element is positioned between the piston 11 and the cylinder 15.

In accordance with one possible embodiment, the elastic element is at least partially housed inside a cavity 19 in the piston 11. In figures 3a-3c two cavities 19 and two helical springs 18 are illustrated, arranged on opposite sides with respect to the stem 6. Preferably two or more elastic elements are provided, and possibly respective cavities, distributed uniformly around the stem.

In accordance with one possible embodiment, the piston 11 and the cylinder 15 form a hydraulic or pneumatic unit suitable for moving the piston 11 at least from the locking position to the unlocking position. In the event that positive actuator means are provided operating on the piston to position it and keep it in the locking position, the hydraulic or pneumatic unit is capable of moving the piston 11 from the locking position to the unlocking position in opposition to these positive actuator means.

With reference to the example illustrated of the hydraulic or pneumatic unit, chamber 16 is put into communication with a source of fluid or liquid under pressure to generate a thrust on piston 11 such as to move it from the locking position to the unlocking position.

The interaction between the piston 11 and the locking element 12, in particular in the form of balls, is preferably achieved using cam means connected to the piston itself and suitable for exerting pressure on the locking element in the movement of the piston 11 from the unlocking position to the locking position. For example the piston 11 can comprise a conical ring 20 operating on the locking element to thrust it into an interference position following the movement of the piston from the unlocking position to the locking position.

The conical shape is suitable for converting the axial forces exerted by means of the movement of the piston into transverse (radial) forces locking the stem.

Figures 4a-4c illustrate a second embodiment which differs from the one illustrated in figures 3a-3c in that a single helical spring is provided, preferably arranged axially to the longitudinal direction 7. Preferably the helical spring 18 is arranged around the piston 11.

In use the mould according to the present invention and according to the description given above is prepared with a first insert locked inside the mould chamber. To unlock the insert, a pneumatic or hydraulic plant connected to the chamber 16 is activated to move the piston 11 from the locking position to the unlocking position.

Following the movement of the piston, the conical ring 20 no longer interacts with the balls, thus cancelling the locking force exerted on the stem by the balls themselves, and allowing the insert to slide out.

The new insert is inserted into the cavity 8 along the longitudinal direction 7 until it fits into the guide structure 14. The pneumatic or hydraulic plant connected to the chamber 16 is deactivated and the piston returns to the locking position as a result of the force exerted by the helical springs. The movement of the conical ring along the longitudinal direction 7 thrusts the balls against the stem along a trajectory perpendicular to the longitudinal direction 7, interfering in particular with the undercut 13.

The present invention achieves the proposed purpose, overcoming the disadvantages complained of in the known art, thanks to the interaction between the piston and the locking elements which is such as to generate a system for rapid changing of the inserts. This interaction makes it possible to achieve a secure and rapid system without introducing structural and/or operating complications.

The annular structure guarantees the centring of the insert and the uniformity of the pressures/forces generated.

The presence of an undercut in the stem ensures the secure and precise locking of the stem itself.

The positive actuator means operating on the piston make the system secure and reliable, even in the event of malfunctions.

The presence of elastic elements, in particular of helical springs, preferably distributed around the stem, makes it possible to achieve a simple and reliable mould, limiting the risks of the piston sticking.

The presence of a hydraulic or pneumatic unit suitable for moving the piston at least from the locking position to the unlocking position makes it possible to simplify and accelerate the stages of changing the inserts, at the same time avoiding the need for access to portions which are hidden or difficult to access in order to unlock the insert to be replaced and lock the replacement insert.

The presence of a locking element in the form of balls makes it possible to reduce friction to a minimum and to ensure adequate and correct contact pressure on the stem such as to guarantee locking it.

The symmetrical conformation and the arrangement of the guide structure closing the cylinder reduces the number of mould components and increases their reliability in terms of locking the insert.

The particular conformation and geometry of the locking means, especially of the conical ring, make it possible furthermore to obtain good reliability, i.e. effective locking forces, even in the event of high dimensional tolerances in the stem.

In accordance with possible embodiments not illustrated and/or described, it is possible for example to use two or more inserts within the same mould and/or the same body.

For example the insert described above could be mounted on the first body 2 instead of on the second body 3.

Different means can be provided as an alternative to the hydraulic or pneumatic unit capable of moving the piston from the locking position to the unlocking position, preferably activatable following an external command. In particular actuator means of electrical type can be provided. As an alternative to the positive actuator means, the movement of the piston from the unlocking position to the locking position can also be effected using means activatable following an external command, for example hydraulic or pneumatic units or using actuator means of electrical type. In the first case (hydraulic or pneumatic units) the cylinder 15 and the piston 11 can be set up as a double-acting pneumatic or hydraulic unit.

As an alternative to the balls which represent a solution that is easy to create and maintain, it is possible to provide different locking elements, for example suitable for reducing the contact pressures between stem and locking element or between conical ring and locking element.

In accordance with a further aspect, the present invention concerns a mould comprising a first insert fitted inside the moulding cavity and at least one further insert capable of being positioned inside the moulding cavity to replace the first insert.

## Claims

1. A mould (1), in particular for plastic materials, comprising:
at least one first body (2) and at least one second body (3) which can be coupled to each other to form a moulding cavity (4) inside the mould (1),
at least one insert (5a, 5b) positioned inside the moulding cavity (4) for modifying the volume and/or the shape, wherein the insert (5a, 5b) comprises a stem (6) extending along a longitudinal direction (7), the stem (6) being inserted along the longitudinal direction (7) in a cavity (8) associated with the first or second body (2, 3),
locking means operating in a reversible manner on the stem (6) for reversibly locking it in the cavity (8) in which it is inserted,
**characterised in that** the locking means comprise:
a piston (11) movable along the longitudinal direction (7) between a locking position for locking the insert (5a, 5b) and an unlocking position for unlocking the insert (5a, 5b), and
at least one locking element (12) movable, by the action of the piston (11),
according to a trajectory incident with the longitudinal direction (7) between an interference position, corresponding to the locking position of the piston (11), wherein the at least one locking element (12) prevents the sliding out of the stem (6) from the respective cavity (8), and a release position, corresponding to the unlocking position of the piston (11),
wherein the stem (6) can be slid out from the relative cavity (8).

2. The mould (1) according to claim 1, wherein the stem (6) is provided with at least one undercut (13) and wherein the at least one locking element (12) located in the interference position interferes with the at least one undercut (13).

3. The mould (1) according to any one of the preceding claims, comprising positive actuator means (17) operating on the piston (11) for positioning it and keeping it in the locking position.

4. The mould (1) according to claim 3, wherein the positive actuator means (17) comprise at least one elastic element, for example at least one helical spring (18), suitable for keeping the piston (11) positively in the locking position.

5. The mould (1) according to claim 4, wherein the at least one elastic element is at least partly housed inside a cavity (19) of the piston (11) or it is wound around the piston (11).

6. The mould (1) according to one or more of the preceding claims, wherein the piston (11) is housed inside a cylinder (15), the piston (11) and the cylinder (15) forming a hydraulic or pneumatic unit suitable for moving the piston (11) at least from the locking position to the unlocking position.

7. The mould (1) according to claim 6, wherein the hydraulic or pneumatic unit is suitable for moving the piston (11) from the locking position to the unlocking position opposing the positive actuator means (17) operating on the piston (11) to position it and keep it in the locking position.

8. The mould (1) according to one or more of the preceding claims, comprising a plurality of balls distributed circumferentially around the stem (6) and movable by the action of the piston (11) inside a guide structure (14).

9. The mould (1) according to claim 8, wherein the guide structure (14) is positioned between the stem (6) and the piston (11).

10. The mould (1) according to claim 6 and 8, wherein the guide structure (14) is positioned for closing the cylinder (15).

11. The mould (1) according to claim 8, wherein the guide structure (14) forms at least a portion of the cavity (8) in which the stem (6) is inserted.

12. The mould (1) according to one or more of the preceding claims, wherein the piston (11) comprises a conical ring (20) operating on the at least one locking element (12) for pushing it in the interference position following movement of the piston (11) from the unlocking position to the locking position.

13. The mould (1) according to one or more of the preceding claims, wherein the piston (11) is positioned concentrically and externally relative to the stem (6).

14. The mould (1) according to claim 8 and 13, wherein the piston (11) is positioned concentrically relative to the guide structure (14) and wherein the guide structure (14) is positioned concentrically and externally relative to the stem (6).
